# EUROPEAN PATENT APPLICATION

(11) **EP 2 343 444 A2**
(43) Date of publication of application: **13.07.2011**
(21) Application number: 10190987.7
(22) Date of filing: 12.11.2010
(51) Int. Cl.: F02C 7/22, F02C 9/26

(54) **Fuel control arrangements for a gas turbine engine**

(30) Priority: 11.01.2010 GB 1000274
(71) Applicant: Rolls-Royce plc, London SW1E 6AT (GB)
(72) Inventor: Scully, Mark, Derby, Derbyshire DE23 1JT (GB); Taylor, Jonathan Paul, Derby, Derbyshire DE73 7JZ (GB)
(74) Representative: Yeomans, Victoria Jane Anora

(57) **Abstract**

Fuel injection apparatus 54, for a gas turbine engine, includes pilot fuel injection circuits 42 which supply pilot injectors 44 with fuel from a manifold 60, through a pilot control valve 46. The state of the control valve 46 is set by pneumatic pressure in the manifold 56. Main injectors 50 are supplied with fuel from the manifold 60 by main injection circuits 48, through main valves 52. The state of the main valves 52 is set by hydraulic pressure in a manifold 58. Accordingly, control signals to the valves 46, 52 are conveyed independently by means of the pneumatic manifold 56 and the hydraulic manifold 58.

## Description

The present invention relates to fuel control arrangements. For example, fuel injection arrangements will be described. Fuel injection arrangements have applications in gas turbine engines, for example.

Examples of the present invention provide apparatus comprising:
a primary fuel injection circuit controlled by a primary fuel control valve arrangement;
at least one secondary fuel injection circuit controlled by a secondary fuel control valve arrangement;
and control means operable to convey control signals to the fuel control valves to set the state of the control valves;
wherein the control means are operable to convey control signals independently to the primary and secondary control valves.

At least one of the fuel control valves may be controlled pneumatically by the control means. The or each pneumatically controlled fuel control valve may have two operating states.

At least one of the fuel control valves may be controlled hydraulically by the control means. The hydraulic fluid for controlling the fuel control valve may be pressurised fuel. The hydraulic fluid pressure may be greater than the fuel pressure in the circuit controlled by the valve. The fuel control valve may be arranged to provide controlled leakage of fuel from the hydraulic fluid to the circuit controlled by the valve.

The primary fuel control valve may be controlled pneumatically, the or each secondary fuel control valve being controlled hydraulically. The primary fuel injection circuit may supply a pilot injector; the secondary fuel injection circuit supplying a main injector.

The primary fuel control valve may control a pilot injector and have multiple states, each of which provides fuel to the pilot injector.

The apparatus may comprise a plurality of primary fuel injection circuits, each having at least one associated secondary fuel injection circuit.

There may be a plurality of secondary fuel injection circuits controlled hydraulically by a common hydraulic circuit and arranged to change state in response to respective hydraulic pressures in the common hydraulic circuit.

The apparatus may further comprise a fuel manifold which is common to all of the primary fuel control valves and/or all of the secondary fuel control valves.

In another aspect, the invention provides a gas turbine engine which includes apparatus as defined above.

Examples of the present invention will now be described in more detail, by way of example only, and with reference to the accompanying drawings, in which:
Fig. 1 is a simplified section along the axis of a gas turbine engine; and
Fig. 2 is a simplified schematic diagram of fuel injector arrangements for the engine of Fig. 1.

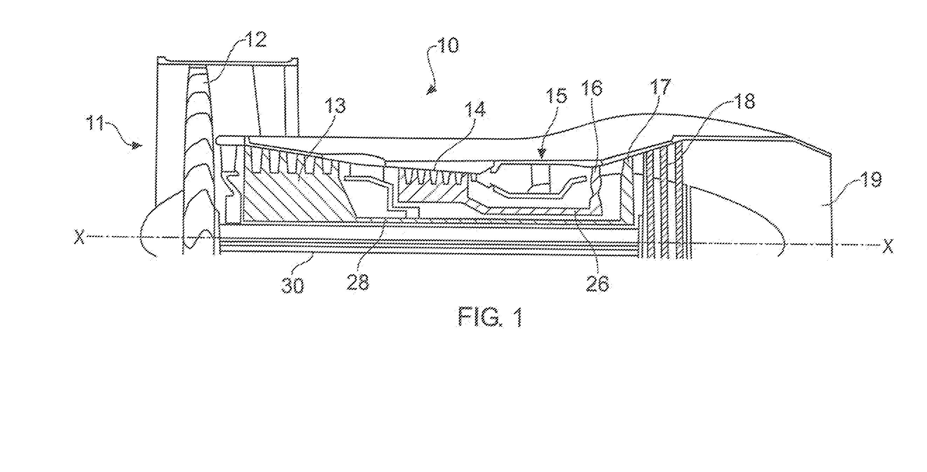

Referring to Fig. 1, a gas turbine engine is generally indicated at 10 and comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18, and an exhaust nozzle 19.

The gas turbine engine 10 operates in a conventional manner so that air entering the intake 11 is accelerated by the fan 12 which produces two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts 26, 28, 30.

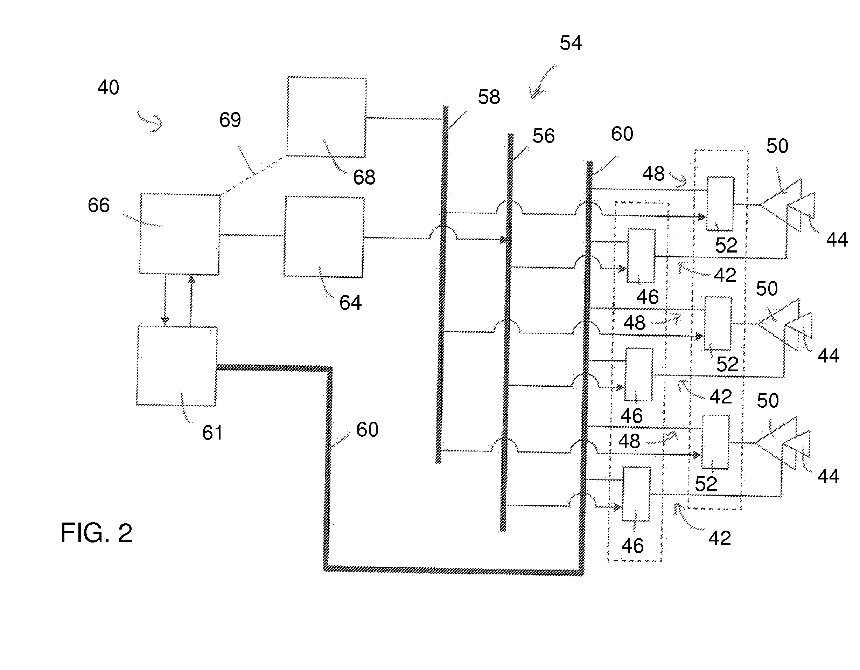

Fuel is supplied to the combustor 15 by fuel injection arrangements which can now be described with reference to Fig. 2. In the examples set out below, multi-point fuel injection will be described. In multi-point fuel injection arrangements, several injectors are provided and may be controlled to turn on (or turn up) one by one, allowing a staged increase in engine speed.

### Overview of fuel injection arrangements

In the example illustrated in Fig. 2, fuel injection apparatus is indicated generally at 40. The fuel injection apparatus 40 comprises several primary fuel injection circuits 42, each including a primary injector 44 supplied by a primary fuel control valve arrangement 46. In this example, each of the primary injectors 44 serves as a pilot injector and will hereafter be described by reference to the term "pilot".

Each primary fuel injection circuit 42 has associated with it at least one secondary fuel injection circuit 48, each including a secondary injector 50 supplied by a secondary fuel control valve arrangement 52. In this example, each of the secondary injectors 50 serves as a main injector and will hereafter be described by reference to the term "main".

Control arrangements 54 are operable to convey control signals to the fuel control valves 46, 52 to set the state of the control valves, as will be described. The control arrangements 54 include a pneumatic manifold 56 which provides control signals in the form of pneumatic pressure to control the pilot valve arrangements 46. The control arrangements 54 also include a hydraulic manifold 58 which provides control signals in the form of hydraulic pressure to control the main valve arrangements 52. Thus, the pilot valve arrangements 46 are controlled pneumatically, while the main valve arrangements 52 are controlled hydraulically, and consequently, the control arrangements 54 convey control signals independently to the pilot and main control valve arrangements 46, 52.

### Primary (pilot) arrangements

Each pilot injector 44 is supplied with fuel from a fuel distribution manifold 60. This supply is under the control of the pilot valve arrangements 46. The fuel distribution manifold 60 is common to all of the pilot valve arrangements 46. The manifold 60 is provided with fuel from a source 61, which maintains adequate fuel pressure and flow in the manifold 60.

Each pilot valve arrangement 46 is controlled pneumatically by pneumatic pressure in the pneumatic servo manifold 56, which is also common to all of the pilot valve arrangements 46.

The pilot valve arrangements 46 each have two operating states. In each state, fuel will be provided from the fuel distribution manifold 60 to the corresponding pilot injector 44. Thus, the two operating states may be "fully on" and "partially on", but neither is "off". Additional valve operating states could be used, if desired, but in this example, none of the operating states would be "off". The absence of an "off" state ensures that the injectors 44 are able to serve as pilots for igniting the injectors 50.

The pneumatic pressure in the pneumatic servo manifold 56 is controlled by a pressure circuit 64 to create manifold pressure in response to instructions received from a control circuit 66, which may be an electronic engine control circuit, for example. Accordingly, the control circuit 66 is able to change the state of the pilot valve arrangements 46 by instructing the pressure circuit 64 to set the appropriate pneumatic pressure in the manifold 56.

The circuit 66 may also provide instructions to the source 61 and receive feedback from the source 61, to ensure that pressure and flow in the manifold 60 is satisfactory at all times.

In a simple example, each of the pilot valve arrangements 46 responds in the same manner to the pressure in the manifold 56. That is, each of the pilot valve arrangements 46 will change state at the same manifold pressure. In other examples, each of the pilot valve arrangements 46 will change state at different manifold pressures in which case, the pilot valve arrangements 46 can be caused to change state one by one by steadily changing the manifold pressure. The significance of this will be explained below.

### Secondary (main) arrangements

Each main injector 50 is supplied with fuel from the fuel distribution manifold 60. This supply is under the control of the main valve arrangements 52. The fuel distribution manifold 60 is thus common to all of the main valve arrangements 52, in addition to being common to all of the pilot valve arrangements 46.

Each main valve arrangement 52 is controlled hydraulically by hydraulic pressure in the hydraulic manifold 58, which is also common to all of the main valve arrangements 52.

The main valve arrangements 52 each have two or more operating states. Each main valve arrangement 52 will have an "off" state in which no fuel is provided to the corresponding main injector 50, and one or more "on" states. In each "on" state, fuel will be provided from the fuel distribution manifold 60 to the corresponding main injector 50.

The hydraulic pressure in the hydraulic manifold 58 is controlled by a hydraulic pressure circuit 68 to create manifold pressure in response to instructions received from a control circuit. The control circuit may be the electronic engine control circuit 66 as indicated by the broken line 69 in Fig. 2, or another circuit. Accordingly, instructions for the state of the main valve arrangements 52 are conveyed by causing the hydraulic pressure circuit 68 to control the hydraulic pressure in the manifold 58.

In a simple example, each of the main valve arrangements 52 responds in the same manner to the pressure in the manifold 58. That is, each of the main valve arrangements 52 will change state at the same manifold pressure or pressures. In other examples, each of the main valve arrangements 52 will change state at different manifold pressures, in which case the main valve arrangements 52 can be caused to change state one by one by steadily changing the manifold pressure. The significance of this will be explained below.

In this example, the hydraulic fluid in the manifold 58, for controlling the main valve arrangements 52, is pressurised fuel. That is, the hydraulic fluid is the same fluid as is distributed through the fuel distribution manifold 60. In this example, the hydraulic pressure in the manifold 58 is arranged to be higher, at all times, than the fuel pressure from the manifold 60 to the main injectors 50. This arrangement of pressures allows the valve arrangements 52 to be designed to ensure a constant leakage of fuel from the hydraulic manifold 58 into the fuel supplied to the main injectors 50. The significance of this will be explained below.

### Example Operation

One example of operation of the fuel injection apparatus 40 can now be described in more detail. It is to be understood that the arrangements described above allow many alternative sequences to be used, other than the sequences described here. The following description is set out in relation to a gas turbine engine 10 which is being operated in a "lean burn" manner. That is, combustion in the combustor 15 is arranged to be at relatively low temperatures and/or to be relatively diluted with air in order to reduce pollutants in the engine exhaust.

Initially, consider the engine 10 in a starting state. In the starting state, the main injectors 50 are not required. Accordingly, the hydraulic pressure in the manifold 58 is set to cause the main valve arrangements 52 to be closed. However, the pilot injectors 44 are required to be alight, particularly in order that the main injectors 50 can be ignited reliably, when required. Consequently, the pneumatic pressure in the manifold 56 is set to cause the pilot valve arrangements 46 to be in their "partially on" state. Pilot flow is thus restricted, which helps to ensure fuel is well spread around the hydraulic manifold 58.

After starting, the engine will reach the idle state. When the engine 10 is required to accelerate, one possible response of the control arrangements 54 is to change the pneumatic pressure in the manifold 56 in order to increase the fuel flow through one or more of the pilot injectors 44. If each of the pilot valve arrangements 46 changes state at different manifold pressures, this allows a steady increase in engine speed as more of the pilot injectors 44 have increased fuel flow.

The "partially on" state of the pilot injectors 44 corresponds with restricted flow engine conditions, including engine startup. As fuel flow through the pilot injectors 44 is increased, as just described, they will run more richly, using more fuel. Accordingly, the settings of the pilot injectors 44 must be established to ensure that the engine 10 is not running unacceptably rich, particularly by reference to exhaust pollutants.

Once all of the pilot injectors 44 have maximum fuel flow through them, or before, further engine speed is achieved by beginning to ignite the main injectors 50. This is done by changing the hydraulic pressure in the manifold 58, in the manner described above. If each of the main valve arrangements 52 changes state at different manifold pressures, the main valve arrangements 52 can be caused to change state one by one, providing a further steady increase in engine speed as more of the main injectors 52 are turned on and fuel flow through them is increased.

Once the main injectors 52 have been ignited, the pilot injectors 46 may be returned to their "partially on" state if desired, by reducing the pressure in the pneumatic manifold 56.

### Concluding remarks

The arrangements described above are expected to have a number of advantages, which may include the following.

Pneumatic control is well suited for systems which have two states, such as the "fully on" and "partially on" states of the pilot injectors 44. However, pneumatic control is less well suited for systems which have multiple states, such as the main injectors 50 are expected to have in a practical implementation. Consequently, the provision of independent arrangements for conveying instructions to the pilot and main valve arrangements 46, 52 allows a pneumatic arrangement to be chosen for the pilot injector 44, without suffering adverse consequences in relation to the control of the main injector 50. Conversely, a hydraulic arrangement can be chosen for the main injector 50, without requiring hydraulic control of the pilot injector 44.

Independent arrangements for conveying instructions also allows the physical location and arrangement of the corresponding mechanisms to be chosen to meet their respective requirements, which may vary as to temperature or other environmental factors within the engine 10, for example.

The arrangements described above are expected to exhibit a number of advantages in relation to thermal management of fuel. Fuel which is stagnant (stationary) within the engine 10 is likely to be degraded in various ways, such as coking or lacquering. This issue is addressed in part by using the same fuel distribution manifold 60 for all of the pilot and main injectors 44, 50, so that stagnant fuel in the manifold 60 is minimised or avoided. Possible problems associated with stagnant fuel in the hydraulic manifold 58, particularly during long periods of idling, are addressed by allowing leakage from the hydraulic manifold 58, through the main valve arrangements 52, by virtue of the relatively high fuel pressure within the manifold 58. Pneumatic control of the pilot valve arrangements 46, together with ensuring that the pilot valve arrangements 46 are never turned fully off, is expected to remove risks of stagnant fuel in this part of the apparatus.

Many variations and alternatives to the apparatus described above can be envisaged. Each fuel injector may have a single pilot associated with a single main injector, or may have multiple main injectors associated with a single pilot. Multiple pilots could be included in a fuel injector having a single main injector or multiple main injectors. A plurality of main injectors are likely to be required, in practice, to provide a staged fuel system for the combustor 15.

Examples of the present invention can be embodied in gas turbine engines for various purposes such as aerospace, marine, or other propulsion purposes, or for static power generation purposes.

## Claims

1. Fuel control apparatus (40) comprising:
a primary fuel injection circuit (42) controlled by a primary fuel control valve arrangement (46);
at least one secondary fuel injection circuit (48) controlled by a secondary fuel control valve arrangement (52);
and control means (54) operable to convey control signals to the fuel control valves to set the state of the control valves;
wherein the control means are operable to convey control signals independently to the primary and secondary control valves; and
**characterised in that** the primary fuel control valve arrangement (46) is controlled pneumatically, the or each secondary fuel control valve arrangement (52) being controlled hydraulically.

2. Fuel control apparatus (40) according to claim 1, **characterised in that** the primary fuel control valve arrangement (46) is controlled pneumatically by the control means (54).

3. Fuel control apparatus (40) according to claim 2, **characterised in that** the or each pneumatically controlled fuel control valve arrangement (46, 52) has two operating states.

4. Fuel control apparatus (40) according to any preceding claim, **characterised in that** the secondary fuel control valve arrangement (52) is controlled hydraulically by the control means (54).

5. Fuel control apparatus (40) according to claim 4, **characterised in that** the hydraulic fluid for controlling the fuel control valve arrangement (52) is pressurised fuel.

6. Fuel control apparatus (40) according to claim 5, **characterised in that** the hydraulic fluid pressure is greater than the fuel pressure in the circuit (48) controlled by the valve arrangement (52).

7. Fuel control apparatus according to claim 6, **characterised in that** the fuel control valve arrangement (52) is arranged to provide controlled leakage of fuel from the hydraulic fluid to the circuit controlled by the valve.

8. Fuel control apparatus (40) according to any preceding claim, **characterised in that** the primary fuel injection circuit (42) supplies a pilot injector (44), the secondary fuel injection circuit (48) supplying a main injector (50).

9. Fuel control apparatus (40) according to any preceding claim, **characterised in that** the primary fuel control valve arrangement (46) controls a pilot injector (44) and has multiple states, each of which provides fuel to the pilot injector.

10. Fuel control apparatus (40) according to any preceding claim, **characterised by** comprising a plurality of primary fuel injection circuits (42), each having at least one associated secondary fuel injection circuit (48).

11. Fuel control apparatus (40) according to any preceding claim, **characterised by** a plurality of secondary fuel injection circuits (48) controlled hydraulically by a common hydraulic circuit (58, 68) and arranged to change state in response to respective hydraulic pressures in the common hydraulic circuit.

12. Fuel control apparatus (40) according to any preceding claim, **characterised by** further comprising a fuel manifold (60) which is common to all of the primary fuel control valve arrangements (46) and/or all of the secondary fuel control valve arrangements (52).

13. A gas turbine engine (10) which includes fuel control apparatus (40) as claimed in any preceding claim.
